Europäisches Patentamt

(19) European Patent Office

Office européen des brevets

(11) Publication number: **0 276 187 B1**

(12) **EUROPEAN PATENT SPECIFICATION**

(45) Date of publication of patent specification :
16.10.91 Bulletin 91/42

(51) Int. Cl.⁵ : **B60Q 1/14**

(21) Application number : **88400127.2**

(22) Date of filing : **21.01.88**

(54) **Photoelectrically controlled side-illuminating device for an automobile.**

(30) Priority : **23.01.87 KR 51987**

(43) Date of publication of application :
**27.07.88 Bulletin 88/30**

(45) Publication of the grant of the patent :
**16.10.91 Bulletin 91/42**

(84) Designated Contracting States :
**DE FR GB IT**

(56) References cited :
**EP-A- 0 055 227
EP-A- 0 067 256
DE-A- 3 113 363
DE-A- 3 436 391
FR-A- 2 311 687**

(56) References cited :
**FR-A- 2 394 417
FR-A- 2 499 002
FR-A- 2 516 032
FR-A- 2 560 130
GB-A- 2 066 459
US-A- 4 249 160**

(73) Proprietor : **Hwang, Yong An
719-39, Jisan-1-Dong Dong-ku
Kwang-Ju Jikhalsi (KR)**

(72) Inventor : **Hwang, Yong An
719-39, Jisan-1-Dong Dong-ku
Kwang-Ju Jikhalsi (KR)**

(74) Representative : **Bressand, Georges et al
c/o CABINET LAVOIX 2 Place d'Estienne
d'Orves
F-75441 Paris Cédex 09 (FR)**

## Description

## FIELD OF THE INVENTION

The present invention relates to a photoelectrically-controlled side-illuminating device, which is capable of illuminating adquately the right and the left side areas of the vehicle where illumination by the headlight is not sufficient. Such a device consists of two side illumination lamps SL1, SL2 installed at the right and the left front corners of the vehicle. These lamps SL1, SL2 are switched on or off easily and selectively by the headlight switch SW1. If the light detection sensor in the photoelectric control circuits A1, A2 for the right and left side illumination lamps SL1, SL2 detects the light coming from the headlight of the vehicle coming cross within the illumination angle S1, S2 of the right and left side illumination lamps SL1, SL2, the brightness of the side illumination lamps SL1, SL2 is automatically adjusted not to cause any disturbance to the view of the driver of the vehicle coming cross or pedestrians nearby.

## DESCRIPTION OF THE PRIOR ART

The conventional headlight LL is good to illuminate the front side of the traveling vehicle, but it is not efficient to illuminate the right and the left sides of the vehicle. Therefore, the vehicle is vulnerable to obstacles by its sides. In particular, when a vehicle is moving on the curved road at night, the driver of the vehicle faces more difficulties because the vehicle's side to be turned cannot be adquately illuminated by the headlight irradiating straight. Because of this phenomenon, the traveling vehicle should be slowed down cautiously on the dark curved road or near the intersection of streets, to avoid the possible accidents. An idea proposed before to solve the problem was that the headlight of the vehicle rotates as the steering wheel is rotated by the driver. The shortcomings of the idea is that it is impossible to illuminate the vehicle's sides when moving straight and likely to disturb the driver's view of the vehicle coming cross while the headlight turns around.

Though the necessity of a side-illuminating system of a vehicle has been recognized since introduction of the vehicle, no solution has been proved satisfactory. The major reason of the such failure is that the light from the side-illuminating lamp. Which is installed beside the vehicle, causes the serious disturbance to the view of the driver of the vehicles coming across, increasing the risk of the traffic accidents.

## SUMMARY OF THE INVENTION

The present invention is deviced to solve such a problem related with the side-illumination of the vehicle. The side illumination lamp SL1, SL2 are installed at the right and the left front corners of the vehicle, and they are able to be selectively switched on or off easily with headlight LL by switching the headlight switch SW1. If the light from the other vehicle coming acrosss is detected, it activates the right or the left photoresistive element Cds1, Cds2 of the sensor in the photoelectric control circuits A1, A2.

The intensity of the detected light is then used to control the brightness of the side-illumination lamps SL1, SL2. Consequently, it prevents the side illumination lamps SL1, SL2 from disturbing the view of the driver of the vehicle coming across and pedestrians nearby. What can be achieved with the side illumination system under the present invention is broadening the driver's view at night without disturbing the other drivers. It may reduce the night traffic accidents and may increase the efficiency of the night traffic much further than before.

The following is the detaile of the present invention described using the diagram on configurations, operations, and effects.

## BRIEF DESCRIPTION OF THE DRAWINGS

When a detailed explanation is given to it according to the drawings attached hereto, it comes as follows ;

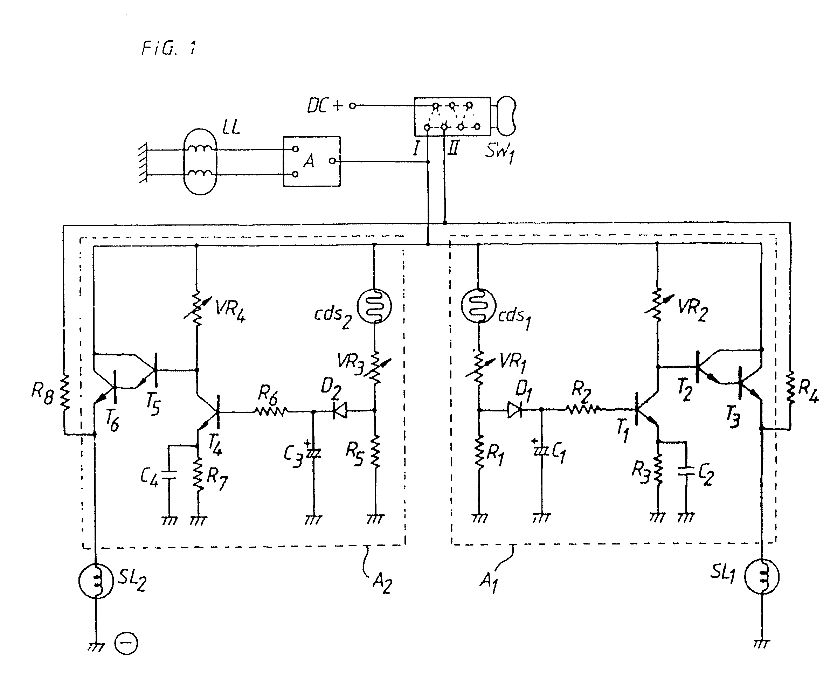

Figure 1 is a minus ( – ) grounded circuit diagram of the present invention ;

Figure 2 is a plus ( + ) grounded circuit diagram of the present inventions ;

figure 3 is a cross-sectional diagram of the light-detection sensor ; and

Figure 4 is a perspective view of the automobile after illstalling the present invention, respectively.

## DESCRIPTION OF THE PREFERRED EMBODIMENTS

Referring to the drawings, the side-illuminating system under the present invention consists of two lamps SL1, SL2 in order to improve the driver's night visibility at the right and the left sides of the vehicle's front ; one lamp SL1 is installed at the left front corner of the vehicle for the illumination to the left direction S1 and the other SL2 at the right front corner of the vehicle to the right direction S2.

In the above system, the switching circuit for the side illumination lamps SL1, SL2 is designed to be switched on or off selectively. In addition, the vehicle source is coupled to the source part of the photoelectric control circuit A1, A2, through the headlight switch terminal I of the headlight switch SW1, So that the self illumination lamps SL1, SL2 can be turned on or off simultaneously with the headlight LL. And, the photoelectric control circuit A1, A2 for the right and the left side-illumination lamp consists of the right and the left photoresistive elements Cds1, Cds2 included in the sensor placed inside the windshield of the vehicle.

Those photoresistive element Cds1, Cds2 detects the light within the illuminating angle S1, S2 of the Side-illuminating lamp. Depending on the intensity of the detected light which is from the vehicles coming across, the brightness of the side illumination light SL1, SL2 is adjusted automatically not to disturb the driver's view of the vehicle crossing each other while the side area of the vehicle is illuminated adequately.

In the left side-illuminating lamp system, the photoresistive element Cds1 is connected to the source through the headlight switch terminal 1 of the headlight switch SW1 and it is connected to the ground through the variable resistor VR1 and the resistor R1. The mid-point between the variable resistor VR1 and the resistor R1 is connected to a diode D1 and is grounded through the electrolytic capacitor C1. After the diode D1, it is also coupled to the base of the transistor T1 through the resistor R2.

The collector of the transistor T1 is connected to the source through the variable resistor VR2 and is also coupled to the base of the Darlington circuit T2, T3. The emitter of the transistor T1 is grounded through the resistor R3 and the capacitor C2. The collector of the Darlington circuit T2, T3 is connected to the source, and its emitter to the ground through the side illumination lamp SL1.

When the headlight switch terminal I of the headlight switch SW1 is switched on at night to turn on the headlight LL, the current from the source flows into the photoelectric control circuit A1 and it turns on the left side illumination lamp SL1. If the light, which comes from the headlight of the vehicle coming across or any other illuminating lights, is detected by the left side photoresistive element Cds1 of the sensor within the illuminating angle S1 of the left side illumination lamps SL1, the interval resistance of the photoresistive element Cd1 decreases. Therefore, the electrolytic capacitor C1 is charging, thus causing the base voltage of the transistor T1 to increase. It causes the current of the transistor T1 to increase and the base voltage of the Darlington circuit T2, T3 to decrease. It results to reduction of the current between the collector and the emitter of the Darlington circuit T2, T3, and the reduction of brightness of the left side-illumination lamp SL1 to the level that the driver of the vehicle coming across is not disturbed. The left side of vehicle is thus low-illuminated by the left side illumination lamp SL1, but the reduced illumination can be compensated by the light from the headlight of the vehicle coming across or any other illuminating light. If the light from the headlight of the vehicle coming across or any other illuminating lights is passed out of the illuminating angle S1 of the left side illumination lamps SL1, the internal resistance of the left-side photoresistive element Cds1 increases. It thus causes the electrolytic capacitor C1 to discharge for the delayed period, After the period, the base voltage of the transistor decreases, thus the current between the collector and the emitter of the transistor T1 decreases. It causes the base voltage of the Darlington circuit T2, T3 to increase, and the current at the collector to increase. It results to the increase of brightness of the left side-illumination lamp SL1 high enough to illuminate the left side of the vehicle adequately.

In the right side-illuminating lamp system, the photoresistive element Cds2 is connected to the source through the headlight switch terminal I of the headlight switch SW1, and it is connected to the ground through the variable resistor VR3 and the resistor R5. The mid-point between the variable resistor VR3 and the resistor R5 is connected to a diode D2 and is grounded through the electrolytic capacitor C3. After the diode D2, it is also coupled to the base of the transistor T4 through the resistor R6. The collector of the transistor T4 is connected to the source part through the vartable resistor VR4 and is also coupled to the base of the Darlington circuit T5, T6. The emitter of the transistor T4 is grounded through the resistor R7 and the Capacitor C4. The collector of the Darlington circuit T5, T6 is connected to the source, and its emitter to the ground through the right side illumination lamp SL2. When the headlight switch terminal I of the headlight switch SW1 is switched on at night to turn on the headlight LL, the current from the source flows into the photoelectric control circuit A2 and if turns on the right side illumination light SL2. If the light, which comes from the headlight of the vehicle coming across or any other illuminating lights, is detected by the right side photoresistive element Cds2 of the sens within the illuminating angle S2 of the right side illumination lamp SL2, the internal resistance of the photoresistive element decreases. Therefore, the electrolytic capacitor C3 is charging, thus causing the base voltage of the transistor T4 to increase. It causes the current of the transistor T4 to increase, and the base voltage of the Darlington circuit T5, T6 to decrease. It results to reduction of the current between the collector and emitter of the Darlington circuit T5, T6, thus reduction of brightness of the right side illumination lamp SL2 to the level that the driver of the vehicle coming across is not disturbed. The right side of vehicle is thus low-illuminaated by the right side illumination lamps SL1, but the reduced illumination can be compensated by the light from the headlight of the vehicle coming across or any other illuminating light. If the light from the headlight of the vehicle coming across or any other illuminating lights is passed out of the illuminating angle S2 of the right side illumination lamp SL2, the internal resistance of the right-side photoresistive element Cds2 increases.

In thus cause the electrolytic capacitor C3 to discharge for the delayed period. After the period, the base voltage of the transistor dereases, thus the current between the collector and the emitter of the transistor T4 decreases. It causes the base voltage of the Darlington circuit T5, T6 to increase, and the current at the collector to increase. It results to the increase of brightness of the right side illumination lamp SL2 high enough to illuminate the right side of the vehicle adequately.

The electrolytic capacitor C1, C3 in the above system provides a delayed time in order to prevent the right and the left side illumination lamps SL1, SL2 from be coming bright early before the vehicule coming across passes by. When a vehicle with its headlight on comes closer from the front, the light intensity measured within an angle of 10 degrees is about 5,000 Cd, but the light intensity detected at an angle of more than 20 degrees is less than 500 Cd. Therefore, it is likely that the sensor installed on a vehicle may sense the weaker light intensity.

When the vehicles are crossing each other than when they are separated at a distance. The electrolytic capacitor C1, C3 holds the side illumination lamp SL1, SL2 off while it discharges, (i.e., the side illumination lamp SL1, SL2 becomes bright after the vehicle coming across passes by completely.) Another function of the electrolytic capacitor C1, C3 is prevention of visual difficulty to the driver caused by the fast on and off operation of the side illumination lamp SL1, SL2 due to many vehicles coming closer together.

The variable resistor VR1, VR3 is used to adjust the distance from the vehicle coming across where the control of the side illumination lamp SL1, SL2 is started. The other variable resistor VR2, VR4 is used to change the illumination intensity of the side illumination lamp SL1, SL2 depending on climate, weather, etc.

Vehicle's side marker switch terminal II of the headlight switch SW1 provides the constant current path throuth the resistor R4, R8 to the emitter of the Darlington circuit T3 and T4, T5 and T6. Such constant current is small and keeps the both side illumination lamps SL1, SL2 lightened dimly. This constant dim light plays the role of the vehicle's side marker. All the description up to this point has been made with reference to the minus ( – ) grounded vehicle.

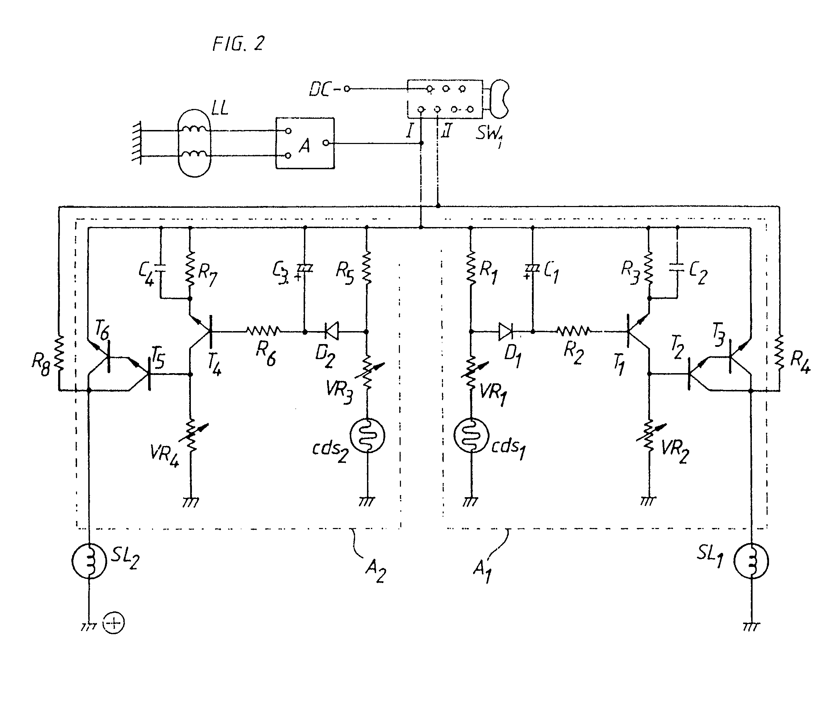

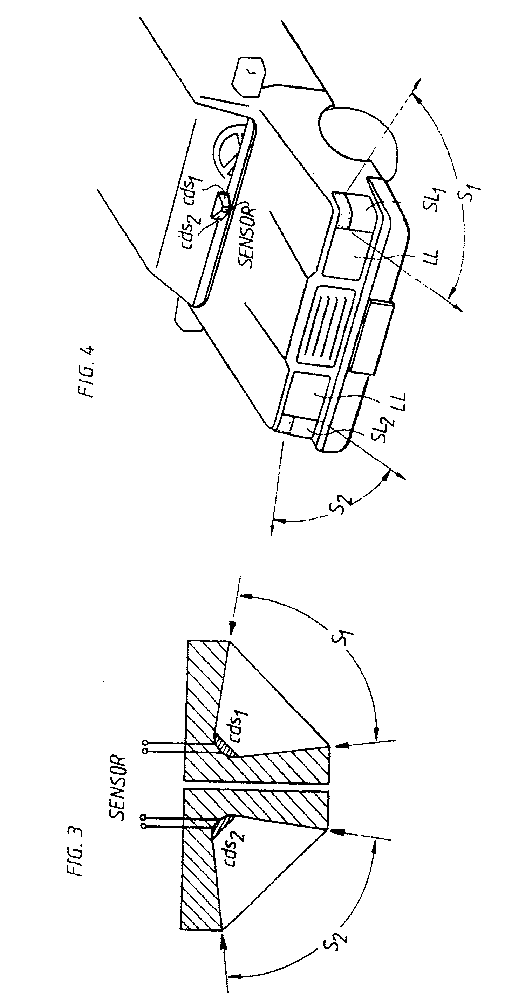

The side-illumination system for the plus ( + ) grounded vehicle is shown in Figure 2. The same functions and effects as in the minus ( – ) grounded vehicle system can be achteved. If minus ( – ) ground part is replaced by the minus(-) source part of the headlight switch SW1 and if the plus ( + ) source part is replaced by the plus ( + ) ground part (but, the locations of the right and left side illumination lamp and the connection of the side marker circuit should be moved from the emitter side to the collector side in the Darlington circuit T2 and T3, T5 and T6.

As discussed in the above the side illumination system under the present invention can adequately illuminate the right and the left side areas of the vehicle by the side illumination lamps SL1, SL2 switched on by the headlight switch SW1 even when the vehicle is traveling on the dark road with vehicles crossing each other. In addition, when the side illumination for the vehicle is not needed because of the headlight illumination of the vehicle coming closer or become of the illuminating light from the street light or from the down town, the brightness of the side illumination lamp SL1, SL2 is controlled not to disturb the view of the driver in the vehicle coming across and the pedestrians at all. Consequently, the possible traffic accident related with the inefficient side illumination in the dark area at night can be prevented. Furthermore, since the side illumination system under the present invention has much better functions than the conventional ones, a great deal of economic advantage can be expected.

## Claims

1. A photoelectric controlled side-illuminating device for a vehicle, characterized in that in order to illuminate adequately the right and the left side areas of the vehicle's front without disturbing the view of the driver of a vehicle coming across, it comprises right and left side illumination lamps (SL1, SL2) installed at the right and the left front corner of the vehicle, directing to the right and the left sides (S1, S2) in order to illuminate the right and the left sides of the vehicle where illumination by the headlight is not sufficient, the side illumination lamps being easily and selectively switched by the headlight switch SW1, the brightness of the side illumination lamps being controlled by right and left side photoelectric control circuits (A1, A2) in which right or left photoresistive element (Cds1, Cds2) detects the light from a vehicle coming across within illuminating angle (S1, S2) and charges an internal resistance causing an electrolytic capaciter (C1, C2) to charge or discharge.

## Patentansprüche

1. Photoelektrisch gesteuerte Vorrichtung zum Ausleuchten der Seitenbereiche eines Fahrzeuges, **dadurch gekennzeichnet, daß** sie, um die rechten und linken Seitenbereiche vor einer Fahrzeugfront gleichmäßig auszuleuchten, ohne dabei die Sicht der Fahrer entgegenkommender Fahrzeuge zu stören, an der rechten und linken vorderen Ecke des Fahrzeuges befestigte rechte und linken Seitenscheinwerfer (SL1, SL2) aufweist, die in Richtung auf die rechten und linken Seitenbereiche (S1, S2) gerichtet sind, um so den rechten und linken Seitenbereich des Fahrzeuges, dort wo die Ausleuchtung durch den Frontscheinwerfer allein nicht ausreichend ist, auszuleuchten, wobei die Seitenscheinwerfer einfach und getrennt durch den Frontscheinwerferschalter (SW1) geschaltet werden und die Helligkeit der Seitenscheinwerfer durch rechte und linke photoelektrische Steuerschaltkreise (A1, A2), in welchen rechte und linke Photowiderstands-Elemente (Cds1, Cds2) das Licht von einem entgegenkommenden Fahrzeug innerhalb von Ausleuchtungswinkeln (S1, S2) erfassen und einen internen Widerstand unter Spannung setzen, wodurch ein Elektrolyt-Kondensator (C1, C2) geladen oder entladen wird, gesteuerte werden.

## Revendications

1. Dispositif d'éclairage latéral à commande photoélectrique pour un véhicule, caractérisé en ce que pour éclairer de façon adéquate les zones latérales de droite et de gauche de l'avant du véhicule sans perturber la vision du conducteur d'un véhicule que l'on croise, ce dispositif comprend des lampes d'éclairage latéral de droite et de gauche (SL1, SL2), installées au niveau des coins avant droit et gauche du véhicule, en étant dirigées vers les côtés droit et gauche (S1, S2) de manière à éclairer les côtés droit et gauche du véhicule, au niveau desquels l'éclairage fourni par les phares est insuffisant, les lampes d'éclairage latéral étant commutées d'une manière commode et sélective par l'interrupteur (SW1) des phares, tandis que la luminosité des lampes d'éclairage latéral est commandée par des circuits de commande photoélectrique de droite et de gauche (A1, A2), dans lesquels un élément photorésistif de droite ou de gauche (Cds1, Cds2) détecte la lumière provenant d'un véhicule que l'on croise sous un angle d'éclairage (S1, S2) et charge une résistance interne provoquant la charge et la décharge d'un condensateur électrolytique (C1, C2).

FIG. 1

FIG. 2

EP 0 276 187 B1

FIG. 3

SENSOR

$cds_2$  $cds_1$

$S_2$  $S_1$

FIG. 4

$cds_2$  $cds_1$

SENSOR

$S_2$  $SL_2$  LL  LL  $SL_1$  $S_1$

EP 0 276 187 B1